# EUROPEAN PATENT APPLICATION

(11) **EP 4 672 384 A1**
(43) Date of publication of application: **31.12.2025**
(21) Application number: 24305998.7
(22) Date of filing: 24.06.2024
(51) Int. Cl.: H01M 4/86, H01M 4/88, H01M 4/92

(54) **METHOD FOR PREPARING A COATED CARBON SUPPORT MATERIAL LOADED WITH PLATINUM-BASED CATALYST FOR FUEL CELLS**

(71) Applicant: TOYOTA JIDOSHA KABUSHIKI KAISHA, Toyota-shi, Aichi 471-8571 (JP); Powall Holding B.V., 2629JD Delft (NL)
(72) Inventor: COTTE, Stéphane, 1140 Brussels (BE); COLEN, Roderik, 2629JD Delft (NL); MOITZHEIM, Sebastien, 2629JD Delft (NL)
(74) Representative: Cabinet Beau de Loménie

(57) **Abstract**

The invention relates to a method for preparing a coated carbon support material loaded with platinum-based catalyst, comprising the steps of:
(i) applying a polymer comprising a polyurea polymer to the surface of a carbon support material loaded with platinum-based catalyst, by Molecular Layer Deposition (MLD), and
(ii) heating the coated carbon support material loaded with platinum-based catalyst obtained in step (i) at a temperature above 600°C.

The invention also concerns a Membrane Electrode Assembly (MEA), a fuel cell, such as a proton exchange membrane fuel cell (PEMFC), and a final product chosen from a vehicle, an electronic device or a stationary power generating device.

## Description

### BACKGROUND OF THE INVENTION

### 1. Field of the invention

The present disclosure relates to a method for preparing a coated carbon support material loaded with platinum-based (Pt-based) catalyst by Molecular Layer Deposition (MLD). The invention also concerns a Membrane Electrode Assembly (MEA), a fuel cell, such as a Proton Exchange Membrane Fuel Cell (PEMFC), and a final product chosen from a vehicle, an electronic device or a stationary power generating device comprising a coated carbon support material loaded with Pt-based catalyst according to the invention.

### 2. Description of Related Art

Carbon-supported platinum (Pt/C) is a conventional fuel cell catalyst for Oxygen Reduction Reaction (ORR) (H.A. Gasteiger, N.M. Markovic, Science 324 (2009) 48-49). However, it has been reported that it has a durability issue originating from dissolution and agglomeration of Pt nanoparticles under fuel cell operating conditions (N. Karthikeyan, B. Vinayan, M. Rajesh, K. Balaji, A. Subramani, S. Ramaprabhu, Fuel Cells 15 (2015) 278-87). Pt nanoparticles can migrate on the carbon support surface and agglomerate due to a weak interaction with the carbon support and the high surface energy of Pt nanoparticles (J.C. Meier, C. Galeano, I. Katsounaros, J. Witte, H.J. Bongard, A.A. Topalov, C. Baldizzone, S. Mezzavilla, F. Schüth, K.J. Mayrhofer, Beilstein J. Nanotechnol. 5 (2014) 44-67). This phenomenon reduces the electrochemical active surface area (ECSA) of the catalyst by increasing Pt nanoparticle sizes, resulting in the degradation of fuel cell performances.

Takenaka et al. reported that a thin, porous silica layer deposited on a Pt/C nanotube catalyst improved catalyst durability (S. Takenaka, H. Miyamoto, Y. Utsunomiya, H. Matsune, M. Kishida, J. Phys. Chem. C 118 (2014) 774-783). The porous "shell" material physically prevented Pt nanoparticles from contacting each other and suppressed the diffusion of dissolved Pt species. This approach mitigated the growth of Pt nanoparticles under continuous fuel cell operation, thereby improving durability.

In this approach, deposition of the encapsulating layer is often done by wet chemistry. Processes can take several hours due to the slow diffusion kinetic in liquid state (H. Lee, Y-E Sung, I. Choi, T. Lim, O.J. Kwon, J. Power Sources 362 (2017) 228-235). Additionally, drying of the solvent and cleaning to remove unwanted chemicals such as chlorine ions are often needed (H. Yamada, H. Kato, K. Kodama, J. Electrochem. Soc. 167 (2020) 084508).

KR102172177B1 discloses a method for preparing a catalyst for a fuel cell comprising a heat-treating step of a mixed solution of carbon, a fatty acid amine dispersion and a metal precursor dispersion, at a high temperature. The disadvantage of this method is that it is in liquid phase, and therefore takes a long time to implement. Furthermore, the catalyst is coated by wet chemistry potentially using polluting solvents.

CN110600755A discloses a coating method of a carbon support material with Pt catalyst comprising the steps of putting carbon support material powder with Pt catalyst in a porous container, and vacuuming a reaction chamber and filling the porous container with CO or H₂; coating the reacted carbon carrier material organically and/or inorganically; and annealing the coated carbon carrier material powder in H₂ atmosphere. CO and H₂ have high adsorption capacity on surfaces of metallic catalysts, like Pt, that causes catalyst poisoning and deactivation. In MLD, interaction with CO and H₂ fails, so that the surface of metallic catalysts cannot be coated, while the surface of the carbon can be coated. Thus, only the surface of carbon is coated in presence of CO or H₂, not the surface of the metallic catalyst (i.e. it is poisoned by CO and H₂), which does not prevent dissolution of the metallic catalyst within the carbon support material and therefore causes durability problems. In addition, this coating method comprises the additional step of forming an inorganic coating layer on the surface of the carbon carrier material, which makes the method long and complex.

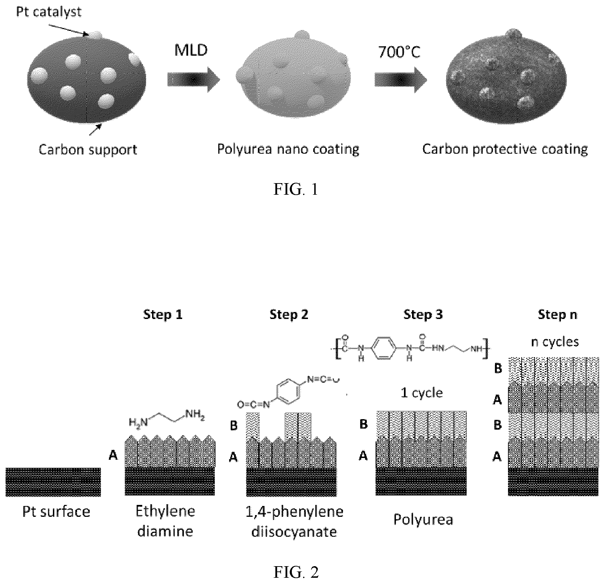

The present invention remedies to the problems of the prior art by providing a step method for synthetizing a coated carbon support material loaded with Pt-based catalyst by using MLD (FIG. 1). In particular, the method of the invention is implemented in the absence of CO and/or H₂ in order to coat both the carbon support material and the Pt-based catalyst. In addition of the coating of the carbon support material, the coating of the Pt-based catalyst leads to improved catalyst durability by avoiding Pt dissolution (which is the main mechanism of durability loss) and to a better control of the porosity of the carbon support material by allowing oxygen to diffuse to the Pt-based catalyst, while maintaining initial performance. The method of the invention therefore achieves a good balance between durability and performance of the catalyst. Another advantage of the method of the invention is that it is implemented in dry condition (gas process) and fast kinetic can be reached due to gas phase reaction, leading to a greener and faster production of the catalyst. The method of the invention specifically targets deposition on the Pt-based catalyst, and thereby allows optimization of the deposition process by controlling the mass of polymer deposited on the catalyst. Lastly, the method of the invention does not include an inorganic coating formation step on the surface of the carbon carrier material which simplifies the method, but also avoid a deterioration of the electronic conductivity of the carbon and an oxidation of the inorganic layer over time.

### SUMMARY

The object of the present invention is to substantially remedy the above-mentioned drawbacks by providing a method for preparing a coated carbon support material loaded with Pt-based catalyst, in which the surface of a carbon support material loaded with Pt-based catalyst is coated by Molecular Layer Deposition (MLD) with a polymer comprising a polyurea polymer, and then annealed at high temperature.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
- FIG. 1 is a schematic diagram of Pt-cMLD/C catalyst prepared by the method of the invention.
- FIG. 2 is a schematic diagram of polyurea coating on Pt/C catalyst by the method of the invention.
- FIG. 3 is a graph showing weight gain of polyurea coating on Pt/C catalyst as function of number of MLD cycles.
- FIG. 4 shows TEM images of exemplified (a) Pt-cMLD10 and (b) Pt-cMLD50.
- FIG. 5 shows XRD patterns of different exemplified catalysts before and after heat treatment at 700°C.
- FIG. 6 shows TEM images of different exemplified catalysts (a) before and (b) after heat treatment at 700°C.
- FIG. 7 show the changes in ECSA measured in CV (H_{upd}) for different exemplified catalysts before and after heat treatment.
- FIG. 8 shows the changes in ECSA measured in CV (H_{upd}) for different exemplified catalysts after heat treatment.
- FIG. 9 shows the ECSA retention ratio as a function of number of potential cycles [0.6 - 1.0 V] at 60°C, 80% RH.

### DETAILED DESCRIPTION OF EMBODIMENTS

The present invention relates to a method for preparing a coated carbon support material loaded with Pt-based catalyst, comprising the steps of:
(i) applying a polymer comprising a polyurea polymer to the surface of a carbon support material loaded with Pt-based catalyst, by Molecular Layer Deposition (MLD),
(ii) heating the coated carbon support material loaded with Pt-based catalyst obtained in step (i) at a temperature above 600°C.

The combination of (i) coating by MLD and (ii) heat treatment at a temperature above 600°C allows controlling very finely the amount of polymer deposited on the Pt-based catalyst particles, and thus the porosity of the carbon layer formed on the Pt-based catalyst particles. Polyurea coating on Pt/C catalyst by the method of the invention is illustrated in FIG. 2.

In an embodiment, the Pt-based catalyst of the invention is a platinum (Pt) catalyst or a platinum alloy catalyst, preferably a Pt, a platinum-cobalt (PtCo) or a platinum-nickel (Pt₃Ni) catalyst, and more preferably a Pt catalyst.

Step (i) of the method of the invention is carried out by successive exposures of the carbon support material loaded with Pt-based catalyst to a compound comprising at least two NH₂ functions, and preferably ethylene diamine (EDA), and then to a compound comprising at least two isocyanate functions, and preferably 1,4-phenylene diisocyanate (PDIC).

The polymer comprising a polyurea polymer can be obtained by reacting the compound comprising at least two NH₂ functions with the compound comprising at least two isocyanate functions, and preferably the 1,4-phenylene diisocyanate (PDIC) with the ethylene diamine (EDA), thereby forming an organic coating layer of polyurea polymer around the carbon support material loaded with Pt-based catalyst.

During step (i), both the carbon support material and the Pt-based catalyst are coated with the polymer comprising a polyurea polymer. Step (i) is thus advantageously carried out in a reactor exempt of CO and/or H₂ insofar as the Pt-based catalyst must not be neutralised / poisoned.

In an embodiment, a purging step is carried out between the exposure to the compound comprising at least two NH₂ functions, preferably ethylene diamine (EDA), and the exposure to the compound comprising at least two isocyanate functions, preferably 1,4-phenylene diisocyanate (PDIC). The purging step is advantageously carried out under an inert gas, advantageously under nitrogen or argon. The purging step preferably lasts for 1 to 10 minutes, and more preferably for 5 minutes.

In an embodiment, a cycle of successive exposures to a compound comprising at least two NH₂ functions, and then to a compound comprising at least two isocyanate functions, possibly followed by a purging step, can be repeated from 1 to 10 times, and more preferably 3 times.

Step (ii) of the method of the invention is carried out at a temperature ranging from 600 to 800°C, advantageously from 650 to 750°C. Step (ii) preferably lasts for 30 minutes to 3 hours, and more preferably for one hour.

Advantageously, the coated carbon support material loaded with Pt-based catalyst obtained at the end of step (ii) has a particle size ranging from 1 to 6 nm, and preferably 2 to 4 nm.

Advantageously, the coated carbon support material loaded with Pt-based catalyst obtained at the end of step (ii) comprises from 1 to 40 % by weight, preferably 1 to 10% by weight, and more preferably from 2 to 5% by weight, of polymer comprising polyurea polymer.

In an embodiment, the method of the invention includes only the step of coating an organic layer made of polymer comprising a polyurea polymer, but does not include other coating layers around the coated carbon support material loaded with Pt-based catalyst, and in particular does not include an inorganic coating layer around the coated carbon support material loaded with Pt-based catalyst. In fact, such step of forming an inorganic coating on the carbon support material may reduce the electronic conductivity of the carbon, and the inorganic layer may also oxidize over time and leach unwanted element into the fuel cell.

The present invention also relates to a Membrane Electrode Assembly (MEA) comprising a membrane covered with a coated carbon support material loaded with Pt-based catalyst prepared by the method according to the invention. In an embodiment of the MEA, the membrane is sandwiched between two gas diffusion layers (GDLs).

A further object of the invention concerns a fuel cell comprising a MEA according to the invention.

A fuel cell according to the invention, which is a proton exchange membrane fuel cell (PEMFC) is also part of the invention.

Finally, the invention also aims at a vehicle, an electronic device or a stationary power generating device, comprising a fuel cell according to the invention.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

### EXAMPLE

### 1- Synthesis of a coated carbon support material loaded with Pt catalyst according to the invention

A commercial Pt/C catalyst was used (product name: TEC10E50E (with a Pt content of 50% by weight) from Tanaka Kikinzoku Kogyo (TKK)). The experiments were carried out in a custom-built fluidized bed MLD reactor operating at atmospheric pressure. Ethylene diamine (EDA) and 1,4-phenylene diisocyanate (PDIC) were obtained from Sigma Aldrich. For EDA, precursor was kept at room temperature. For PDIC, bubbler was kept at 110°C. The reactor was kept at a constant temperature of 160°C. Nitrogen gas was flown through a distributor plate at the bottom of the reactor to fluidize the powders.

Step (i) consisted of successive exposures of the Pt/C catalyst to EDA (150 s) and PDIC (150 s), separated by a purging step of 5 minutes using nitrogen as an inert gas. Herein, cycles were repeated 5, 10, 20 and 50 times corresponding to Pt-cMLD5/C, Pt-cMLD10/C, Pt-cMI,D20/C and Pt-cMLD50/C.

The coated catalyst obtained at the end of step (i) was further heat treated at 700°C for 1h in 5%H₂/Ar to carbonize the polyurea in a porous carbon layer.

### 2- Electrochemical analysis of the obtained coated Pt/C catalyst

Cyclic voltammetry (CV) was undertaken by using a rotating disk electrode (RDE). The measurements were obtained by using a potentiostat (Biologic VSP-300, France) with a three electrode electrochemical cell configuration. A graphite rod electrode and a reversible hydrogen electrode (Gaskatel HydroFlex, Germany) were used as the counter electrode and reference electrode, respectively. A glassy carbon RDE (Pine Research Instrumentation, USA) with 0.196 cm² geometric area was used as the working electrode. The working electrode was prepared by applying catalyst ink onto the glassy carbon electrode. The catalyst ink was prepared by mixing 4.2 mg of the catalysts, 0.58 ml of 5 wt% Nafion^{™} ionomer (DuPont, USA), 1 ml of ultrapure water and 8.4 ml of ethanol (Sigma Aldrich, Germany) under sonication for 2 min. The catalyst ink was then applied to the glassy carbon electrode.

CV was conducted in N₂-saturated 0.1M HClO₄ at a scan rate of 20 mV/s from 0.05 V to 1.2 V (vs. RHE).

Accelerated degradation test (ADT) has been carried out using a step potential profile of 0.6-1V vs. RHE, 3s, 3s. ECSA evaluation has been carried out by H_{upd} every 3000 potential cycles. All electrochemical experiments were performed at 25°C.

### 3- Fabrication of Membrane Electrode Assemblies

Membrane electrode assemblies (MEAs) were fabricated by using the decal method. Catalyst ink was prepared by mixing catalyst powder (Pt/C and Pt-cMI,D/C) with Nafion^{™} dispersion (20 wt%), ethanol and water with a I/C (Ionomer/Catalyst ratio) of 0.85. The Pt loading was set at 0.2 mg_{Pt}/cm² and 0.1 mg_{Pt}/cm² at the cathode and the anode respectively. Anode, membrane NC700 (Chemours, USA) and cathode was hot pressed at 140°C under 10 bar for 3 min. The membrane coated with catalyst was then sandwiched by gas diffusion layers (Sigracet 35BC, SGL Carbon, Wiesbaden, Germany). The active area was 1 cm².

### 4- Single cell test and accelerated stress test

The MEAs were assembled in fuel cell hardware and tested in a Greenlight G40 fuel cell test bench. Biologic HCP-803 is used as a potentiostat. The test station allows control of gas flow rate, gas humidification, and cell temperature. An absolute pressure of 115 kPa was set in both fuel cell compartments. The fuel cell polarization curves presented in this work were recorded at 80% RH (relative humidity) in a voltage range between OCV and 100 mV with a sweep rate of 20 mV/s. While 100% H₂ (0.5 nlpm (normal liter per minute) was fed in the anodic side, in the cathodic side 100% air (1.0 nlpm) was introduced. Cyclic Voltammetry (CV) measurements were performed between 50 and 600 mV at a sweep rate of 50 mV/s at 55°C with 100% RH. The electrochemical surface areas (ECSAs) of electrodes were calculated based on hydrogen absorption area in the cyclic voltammetry curve.

The durability of Pt/C and Pt-cMLD/C MEAs was evaluated with potential cycling in a range of 0.6 V-1.0 V (vs. NHE) for 9000 cycles.

### 5- Characterisation

Thermogravimetric analysis (TGA; TA Instruments, USA) and X-ray diffraction (XRD; Cu Ka radiation; Rigaku, Japan) measurements were used for optimization of carbonization temperature. High resolution transmission electron microscope (HR-TEM; FEI Tecnai, USA) was used to visualise morphology of encapsulation layer.

### 6- Results

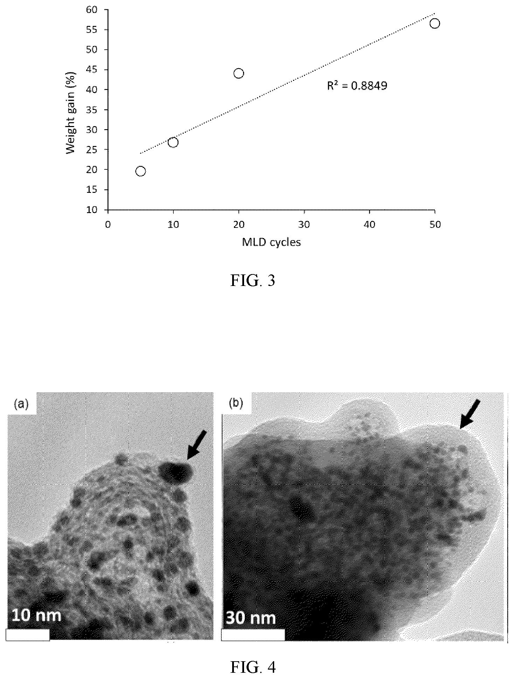

The results are shown in Figures 3 to 9 and explained hereafter.

FIG. 3 shows the weight gain of polyurea on Pt/C powder as a function of the number of MLD cycles as determined by TGA analysis. The plot shows a linear relationship which demonstrates how MLD can finely control the polymer coating on the powder.

FIG. 4 shows the TEM images of Pt/C powder after polyurea coating with 10 and 50 cycles. Up to 10 MLD cycles, the polymer coating is hardly visible. In FIG. 4-a, the coating appears on a Pt particle (see arrow) and thickness is estimated between 2 to 3 nm. For 50 cycles, polymer is clearly visible and encapsulates the catalyst fully. Thickness is estimated between 5 to 10 nm.

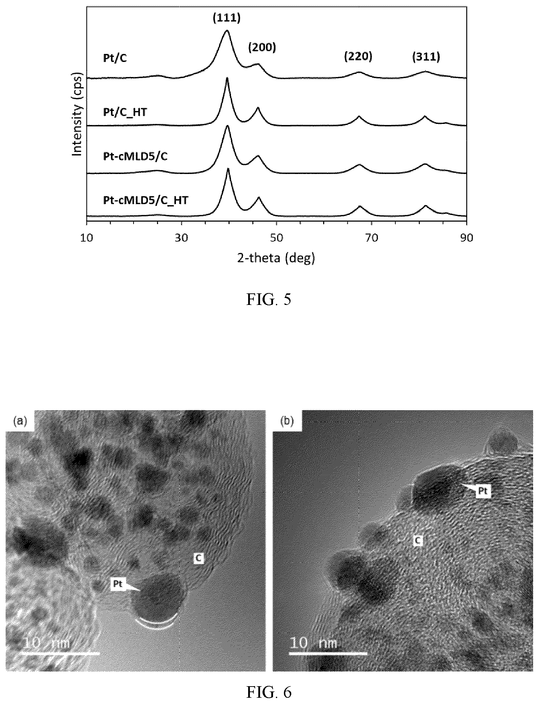

FIG. 5 shows the XRD patterns of the reference Pt/C and the coated catalyst Pt-cMLD5/C before and after heat treatment. In all patterns, observation of peaks at 39.8°, 46.2°, 67.5° and 81.5° is consistent with Pt. Pt particle sizes were calculated by using Scherrer equation. Regarding reference Pt/C, Pt size grew from 4 nm to 7.3 nm with heat treatment. For Pt-cMLD5/C, particle size estimation is 4.6 nm, similar to reference Pt/C. After heat treatment (HT), particle size increased to 5.9 nm. This shows that the encapsulation of Pt particles by polyurea is effective to avoid Pt nanoparticles growth during heat treatment.

FIG. 6 shows the TEM images of the coated catalyst powder Pt-cMLD5/C. Before heat treatment, polymer layer is visible on the Pt particles and thickness is estimated between 0.8 to 1 nm. After heat treatment, the carbonized polymer coating becomes hardly visible by TEM due to the very thin layer (< 1 nm) and low contrast of carbon.

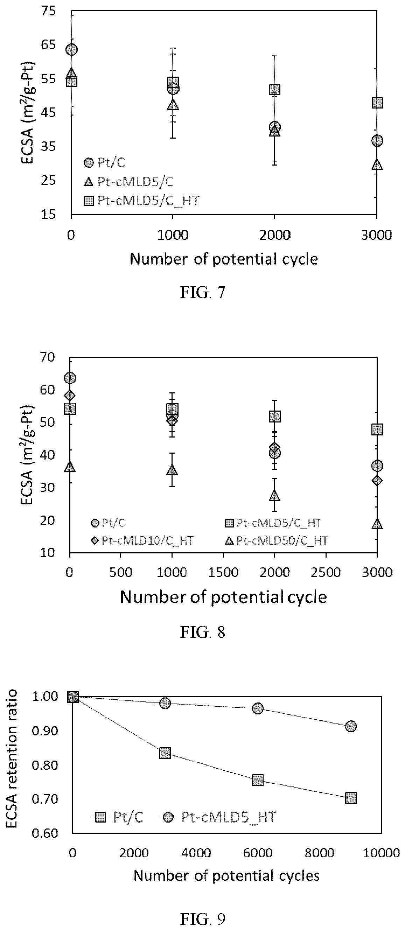

FIG. 7 shows the evolution of ECSA as measured from H_{upd} during CV as a function of the number of potential cycles (0.6 - 1.0 V) for Pt-cMLD5/C before and after heat treatment with Pt/C as reference. Regarding retention of the performance Pt-cMLD5/C retains 53% of the ECSA after 3000 cycles which is similar to Pt/C reference with 58% retention (within the error of the measurement). However, after heat treatment, the retention increases up to 88%. This shows that carbonized layer (obtained after step (ii)) is more efficient than polyurea to avoid Pt dissolution.

FIG. 8 shows similar information as in FIG. 7 but for different amount of polyurea coated on the catalyst powder after heat treatment. From initial performance, 50 MLD cycles decreases the ECSA the most. Regarding 10 and 5 cycles, initial performance is close to reference Pt/C and within the error of the measurement. As for ECSA retention, increasing the thickness of the protective layer with 10 or 50 MLD cycles seems to show no benefit with respectively 55% and 52% retention compared to 58% for the reference Pt/C.

FIG. 9 shows the ECSA retention ratio evaluated in MEA as a function of potential cycle (0.6 - 1.0 V) at 60°C, 80%RH. While reference material Pt/C retains 70% of its performance after 9000 cycles, Pt-cMLD5_HT shows an outstanding 91% performance retention. This clearly shows the benefit of the method of the invention to avoid Pt dissolution.

## Claims

1. A method for preparing a coated carbon support material loaded with platinum-based catalyst, comprising the steps of:
(i) applying a polymer comprising a polyurea polymer to the surface of a carbon support material loaded with platinum-based catalyst, by Molecular Layer Deposition (MLD),
(ii) heating the coated carbon support material loaded with platinum-based catalyst obtained in step (i) at a temperature above 600°C.

2. A method according to claim 1, wherein the platinum-based catalyst is a platinum (Pt) catalyst or a platinum alloy catalyst, preferably a Pt, a platinum-cobalt (PtCo) or a platinum-nickel (Pt₃Ni) catalyst, and more preferably a Pt catalyst.

3. A method according to claim 1 or claim 2, wherein step (i) is carried out by successive exposures of the carbon support material loaded with platinum-based catalyst to a compound comprising at least two NH₂ functions, and preferably ethylene diamine (EDA), and then to a compound comprising at least two isocyanate functions, and preferably 1,4-phenylene diisocyanate (PDIC).

4. A method according to claim 3, wherein the polymer comprising a polyurea polymer is obtained by reacting the compound comprising at least two NH₂ functions with the compound comprising at least two isocyanate functions, and preferably the 1,4-phenylene diisocyanate (PDIC) with the ethylene diamine (EDA), thereby forming an organic coating layer of polyurea polymer around the carbon support material loaded with platinum-based catalyst.

5. A method according to claim 3 or claim 4, wherein a purging step is carried out between the exposure to the compound comprising at least two NH₂ functions, preferably ethylene diamine (EDA), and the exposure to the compound comprising at least two isocyanate functions, preferably 1,4-phenylene diisocyanate (PDIC).

6. A method according to claim 5, wherein the purging step is carried out under an inert gas, advantageously nitrogen or argon, preferably for 1 to 10 minutes, and more preferably for 5 minutes.

7. A method according to any one of claims 3 to 6, wherein a cycle of successive exposures to a compound comprising at least two NH₂ functions, and then to a compound comprising at least two isocyanate functions, possibly followed by a purging step, is repeated from 1 to 10 times, and more preferably 3 times.

8. A method according to any one of claims 1 to 7, wherein step (i) is carried out in a reactor exempt of CO and/or H₂.

9. A method according to any one of claims 1 to 8, wherein step (ii) is carried out at a temperature ranging from 600 to 800°C, advantageously from 650 to 750°C, and preferably for 30 minutes to 3 hours, and more preferably for one hour.

10. A method according to any one of claims 1 to 9, wherein the coated carbon support material loaded with platinum-based catalyst obtained at the end of step (ii) has a particle size ranging from 1 to 6 nm, and preferably 2 to 4 nm.

11. A method according to any one of claims 1 to 10, wherein the coated carbon support material loaded with platinum-based catalyst obtained at the end of step (ii) comprises from 1 to 40% by weight, preferably from 1 to 10% by weight, and more preferably from 2 to 5% by weight, of polymer comprising polyurea polymer.

12. A Membrane Electrode Assembly (MEA) comprising a membrane covered with a coated carbon support material loaded with platinum-based catalyst prepared by the method according to any one of claims 1 to 11.

13. A fuel cell comprising a Membrane Electrode Assembly (MEA) according to claim 12.

14. A fuel cell according to claim 13, which is a proton exchange membrane fuel cell (PEMFC).

15. A vehicle, an electronic device or a stationary power generating device, comprising a fuel cell according to claim 14.

## Amended claims

### Amended claims in accordance with Rule 137(2) EPC.

1. A method for preparing a coated carbon support material loaded with platinum-based catalyst, comprising the steps of:
(i) applying a polymer comprising a polyurea polymer to the surface of a carbon support material loaded with platinum-based catalyst, by Molecular Layer Deposition (MLD),
(ii) heating the coated carbon support material loaded with platinum-based catalyst obtained in step (i) at a temperature above 600°C,
wherein step (i) is carried out by successive exposures of the carbon support material loaded with platinum-based catalyst to a compound comprising at least two NH₂ functions, and then to a compound comprising at least two isocyanate functions,
wherein a cycle of successive exposures to a compound comprising at least two NH₂ functions, and then to a compound comprising at least two isocyanate functions, is repeated from 1 to 10 times.

2. A method according to claim 1, wherein the platinum-based catalyst is a platinum (Pt) catalyst or a platinum alloy catalyst, preferably a Pt, a platinum-cobalt (PtCo) or a platinum-nickel (Pt₃Ni) catalyst, and more preferably a Pt catalyst.

3. A method according to claim 1 or claim 2, wherein step (i) is carried out by successive exposures of the carbon support material loaded with platinum-based catalyst to ethylene diamine (EDA), and then to 1,4-phenylene diisocyanate (PDIC).

4. A method according to any one of claims 1 to 3, wherein the polymer comprising a polyurea polymer is obtained by reacting the compound comprising at least two NH₂ functions with the compound comprising at least two isocyanate functions, and preferably the 1,4-phenylene diisocyanate (PDIC) with the ethylene diamine (EDA), thereby forming an organic coating layer of polyurea polymer around the carbon support material loaded with platinum-based catalyst.

5. A method according to any one of claims 1 to 4, wherein a purging step is carried out between the exposure to the compound comprising at least two NH₂ functions, preferably ethylene diamine (EDA), and the exposure to the compound comprising at least two isocyanate functions, preferably 1,4-phenylene diisocyanate (PDIC).

6. A method according to claim 5, wherein the purging step is carried out under an inert gas, advantageously nitrogen or argon, preferably for 1 to 10 minutes, and more preferably for 5 minutes.

7. A method according to any one of claims 1 to 6, wherein a cycle of successive exposures to a compound comprising at least two NH₂ functions, and then to a compound comprising at least two isocyanate functions, possibly followed by a purging step, is repeated 3 times.

8. A method according to any one of claims 1 to 7, wherein step (i) is carried out in a reactor exempt of CO and/or H₂.

9. A method according to any one of claims 1 to 8, wherein step (ii) is carried out at a temperature ranging from 600 to 800°C, advantageously from 650 to 750°C, and preferably for 30 minutes to 3 hours, and more preferably for one hour.

10. A method according to any one of claims 1 to 9, wherein the coated carbon support material loaded with platinum-based catalyst obtained at the end of step (ii) has a particle size ranging from 1 to 6 nm, and preferably 2 to 4 nm.

11. A method according to any one of claims 1 to 10, wherein the coated carbon support material loaded with platinum-based catalyst obtained at the end of step (ii) comprises from 1 to 40% by weight, preferably from 1 to 10% by weight, and more preferably from 2 to 5% by weight, of polymer comprising polyurea polymer.

12. A Membrane Electrode Assembly (MEA) comprising a membrane covered with a coated carbon support material loaded with platinum-based catalyst prepared by the method according to any one of claims 1 to 11, wherein the coated carbon support material loaded with Pt-based catalyst comprises from 1 to 40 % by weight of polymer comprising polyurea polymer.

13. A fuel cell comprising a Membrane Electrode Assembly (MEA) according to claim 12.

14. A fuel cell according to claim 13, which is a proton exchange membrane fuel cell (PEMFC).

15. A vehicle, an electronic device or a stationary power generating device, comprising a fuel cell according to claim 14.
